Europäisches Patentamt

European Patent Office

Office européen des brevets

(11) Veröffentlichungsnummer: **0 232 833 B1**

(12) **EUROPÄISCHE PATENTSCHRIFT**

(45) Veröffentlichungstag der Patentschrift: **23.01.91**

(21) Anmeldenummer: **87101429.6**

(22) Anmeldetag: **03.02.87**

(51) Int. Cl.⁵: **B 62 D 55/253**

(54) Gleiskette.

(30) Priorität: **07.02.86 DE 3603933**

(43) Veröffentlichungstag der Anmeldung:
**19.08.87 Patentblatt 87/34**

(45) Bekanntmachung des Hinweises auf die
Patenterteilung:
**23.01.91 Patentblatt 91/04**

(84) Benannte Vertragsstaaten:
**AT BE CH FR GB IT LI LU NL SE**

(56) Entgegenhaltungen:
**DE-A-1 480 757**
**US-A-1 966 450**
**US-A-2 536 064**
**US-A-4 448 459**

(73) Patentinhaber: **Krauss-Maffei Aktiengesellschaft**
**Krauss-Maffei-Strasse 2**
**D-8000 München 50 (DE)**

(72) Erfinder: **Schlegl, Eugen, Ing. (grad.)**
**Akeleistrasse 26**
**D-8038 Gröbenzell (DE)**

Courier Press, Leamington Spa, England.

EP 0 232 833 B1

**Beschreibung**

Die Erfindung bezieht sich auf eine Gleiskette nach der europäischen Patentanmeldung EP—A—0 176 675 gemäß Oberbegriff des Anspruchs 1. Diese Patentanmeldung wurde nach dem Prioritätstag und vor dem Anmeldetag des vorliegenden Patents veröffentlicht.

Die das Hauptpatent betreffende. aus einzelnen biegeweichen Kettengliedern zusammengesetzte Gleiskette soll dahingehend verbessert werden, daß diese höheren Belastungen standhalten kann und eine längere Betriebsdauer erhält.

Diese Aufgabe wird durch die kennzeichnenden Merkmale des Anspruchs 1 gelöst.

Eine Gleiskette dieser Art hat den Vorteil, daß die Kraftein leitung von der Einspannstelle an den Querstegen in den Schub feldträger sowohl bei Zugbelastung als auch bei der ständig gegebenen Knick- und Biegebelastung in gedämpfter Weise erfolgt.

Vorteilhafterweise ist dabei das elastomere Material in einem sich verjüngenden Spaltraum zwischen Schubfeldträger und Klemmleiste angeordnet, wodurch sich eine besonders günstige Vergleichmäßigung der in den Schubfeldträger eingeleiteten Kräfte einstellt.

Zweckmäßigerweise ist der mit elastomerem Material gefüllte Spaltraum so gestaltet, daß die Schubfeldträger im wesentlichen in einer Ebene zu liegen kommen, so daß die Zugkräfte in der Gleiskette in einer durchgehenden Linie ohne Versetzungen übertragen werden können. Bei Vermeidung von scharfen Knicklinien ist somit ausgeschlossen, daß in die Verbindungsstellen der Kettenglieder durch einen versetzten Kraftlinienfluß ein Kippmoment eingeleitet wird.

Um zu verhindern, daß die mit dem biegeweichen Schubfeldträger aus Stahlfolien verstärkten elastomeren Kettenglieder beim überfahren von Gesteinsbrocken und dergleichen an ihren Randbereichen zu stark einknicken, ist es zweckmäßig, die Randbereiche mit Stützelementen zu versehen.

Bevorzugte Ausführungsformen der Stützelemente ergeben sich aus den Unteransprüchen 6 bis 10.

Ausführungsbeispiele der Erfindung werden nachfolgend anhand der Zeichnung näher beschrieben.

Es zeigen in schematischer Darstellung

Fig. 1 einen Längsschnitt durch ein Kettenglied und durch die zu dessen beiden Seiten angeschlossenen Nachbarkettenglieder einer Gleiskette,

Fig. 2 die Verbindungsstelle zwischen zwei Kettengliedern nach Fig. 1 in vergrößertem Maßstab,

Fig. 3 einen Längsschnitt durch ein Kettenglied mit Stützelementen gemäß der Schnittlinie III—III in Fig. 4,

Fig. 4 die Draufsicht auf ein Teilstück des Kettengliedes nach Fig. 3,

Fig. 5 einen Längsschnitt durch ein Kettenglied mit einer weiteren Ausführungsform eines Stützelementes,

Fig. 6 die Seitenansicht eines mit einem Schutzbügel ausgestatteten Kettengliedes und

Fig. 7 die Draufsicht auf ein Teilstück des Kettengliedes nach Fig 6.

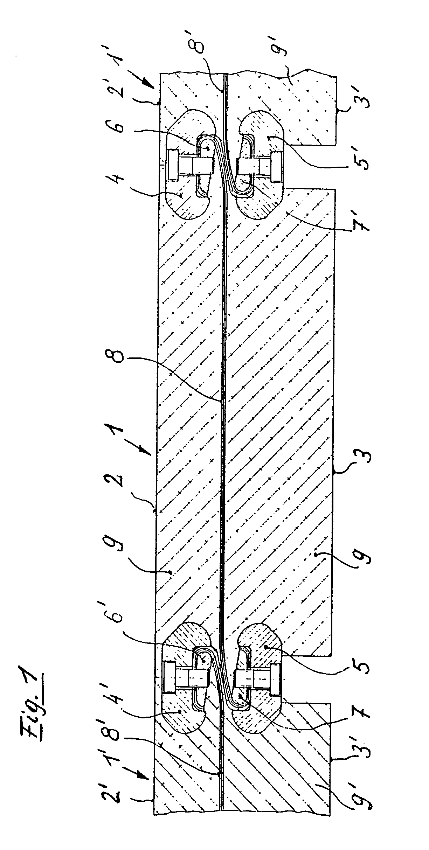

Die in den Figuren 1 bis 7 dargestellte Gleiskette weist einander identische Kettenglieder 1 bzw. 1' auf, die eine von den Fahrwerksrädern (nicht dargestellt) überrollte Innenlauffläche 2 bzw. 2' und eine der Bodenseite zugewandte Außenlauffläche 3 bzw. 3' besitzen. Nach Fig. 1 trägt jedes Kettenglied 1 bzw. 1' zwei Querstege 4 und 5 bzw. 4' und 5' von denen der Quersteg 4 bzw. 4' der Innenlauffläche 2 bzw. 2' und der Quersteg 5 bzw. 5' der Außenlauffläche 3 bzw. 3' zugeordnet ist. Jeder der Querstege 4, 5 bzw. 4'. 5' ist mit einer Klemmleiste 6 und 7 bzw. 6' und 7' versehen, mit denen ein aus einer oder mehreren dünnen Folien aus Federstahlblech bestehender Schubfeldträger 8 bzw. 8' fest mit den Querstegen 4 und 5 bzw. 4' und 5' verbunden ist. Der Schubfeldträger 8 bzw. 8' befindet ist in der neutralen Faser des Kettengliedes und ist zu beiden Seiten von elastomerem Material 9 bzw. 9' umgeben. Der Schubfeldträger 8 des Kettengliedes 1 ist auf der einen Seite zwischen dem Quersteg 4 und der Klemmleiste 6 und auf der anderen Seite zwischen dem Quersteg 5 und der Klemmleiste 7 eingeklemmt. In dieser Form stellt das Kettenglied ein einheitliches Bauteil dar, das durch Verschraubung (nicht dargestellt) des Quersteges 4 und des Quersteges 5 mit den Querstegen 5' und 4' der angrenzenden Kettenglieder 1' zu einer Gleiskette zusammenfügbar ist.

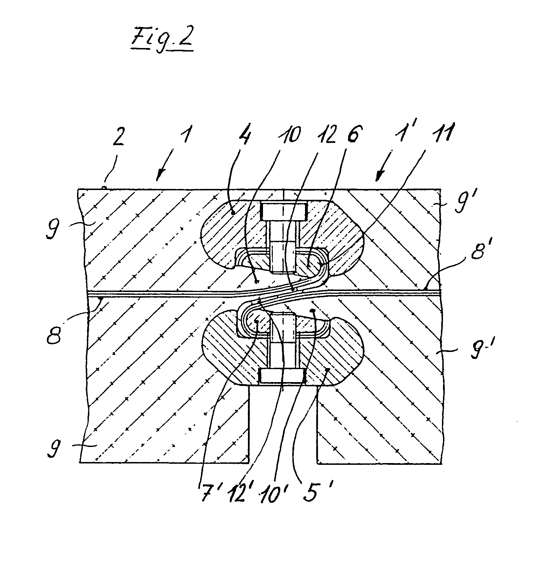

Wie aus Fig. 2 im einzelnen deutlicher zu erkennen, ist zwischen der dem Quersteg 4 abgewandten Seite der Klemmleiste 6 und dem Schubfeldträger ein Spaltraum 10 umschlossen, der mit elastomerem Material 9 gefüllt ist. Dieser Spaltraum 10 verjüngt sich zu der dem benachbarten Kettenglied 1' zugewandten Umlenkkante 11 der Klemmleiste 6. Auf der dem Spaltraum 10 abgewandten Seite des Schubfeldträgers 8 ist dieser mit einer Lage 12 aus elastomerem Material 9 belegt. Der Schubfeldträger 8 ist auf der Länge des Spaltraumes 10 in einer Steigung nach oben geführt. In gleicher Weise, jedoch in spiegelbildlicher Umkehrung ist der Schubfeldträger 8' des anschließenden Kettengliedes 1' befestigt, dessen dem Kettenglied 1 baugleich entsprechende Teile mit dem Index versehen sind.

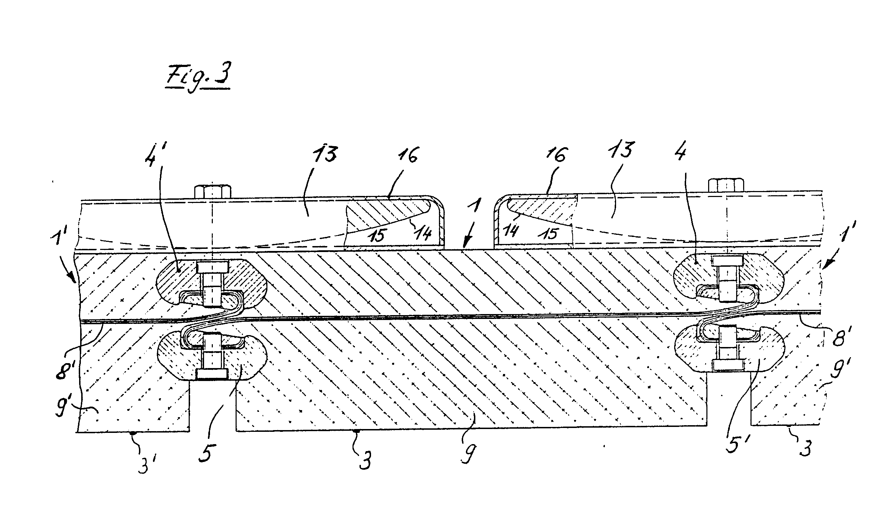

Die Fig. 3 zeigt ein Kettenglied gemäß Fig. 1 auf dem an den Randbereichen Stützelemente in Form von Scheibensegmenten 13 angeordnet sind. Die Scheibensegmente sind mittig mit den der Innenlauffläche 2 bzw. 2' zugeordneten Querstegen 4 bzw. 4' verschraubt und weisen eine gekrümmte Abwälzfläche 14 auf, deren Krümmungsradius kleiner oder gleich dem Radius der Fahrwerksräder (nicht dargestellt) ist. Die Abwälzfläche schließt mit der Innenlauffläche 2 einen Spaltraum 15 ein, der von einer Gummihaube 16 abgedeckt ist, um ein Eindringen von Verunreinigungen zwischen Abwälzfläche und Innenlauffläche zu verhindern.

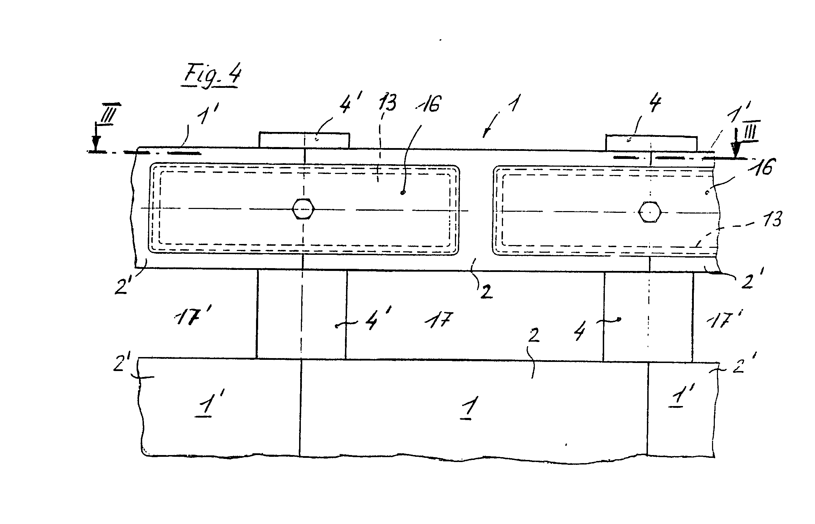

Die Fig. 4 zeigt die mit Gummihauben 16 abgedeckten Scheibensegmente 13 in der Draufsicht, wobei ersichtlich ist, daß im Kettenglied 1 bzw. 1' Öffnungen 17 bzw. 17' für den Durchtritt der Triebradzähne (nicht dargestellt) vorgesehen sind, die mit den Querstegen 4 bzw. 4' in Eingriff stehen. Das in Fig. 4 nur als Teilstück dargestellte Kettenglied 1 bzw. 1' besteht aus einem breiten mittleren von elastomerem Material umgebenen Schubfeldträger an den sich an den Randbereichen des Kettengliedes unter Freilassung jeweils einer Öffnung für die Zähne der Triebkränze zwei schmalere, von elastomerem Material umgebene Schubfeldträger anschließen. Diese schmalen Schubfeldträger erfahren beim überrollen von Gesteinsbrocken und dergleichen eine Abstützung durch die Scheibensegmente. Im mittleren Bereich besitzen die Querstege 4 bzw. 4' nach innen ragende Kettenführungszähne (nicht dargestellt).

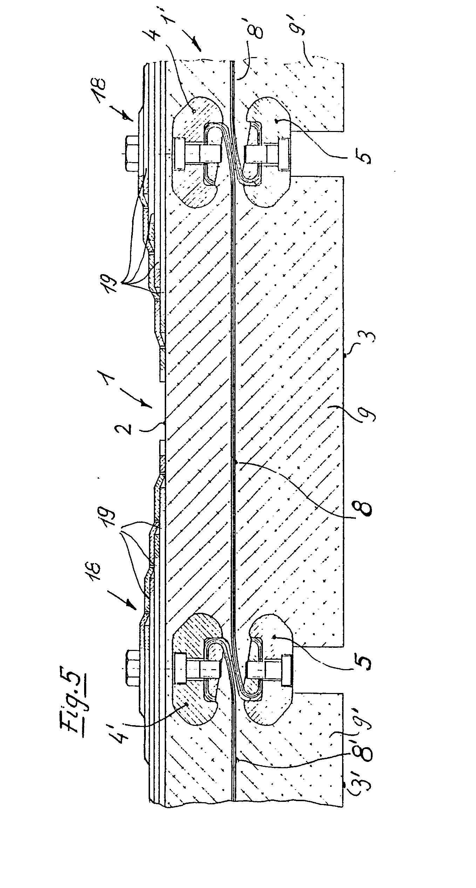

Die Fig. 5 zeigt ein Kettenglied gemäß Fig. 1 auf dem an den Randbereichen an den Querstegen 4 bzw. 4' Stützelemente in Form von Blattfederpaketen 18 befestigt sind. Die einzelnen Blattfedern 19 der Blattfederpakete weisen dabei in von der Innenlauffläche 2 abgewandter Richtung eine in Stufen verkürzte Länge auf. In der Breite entsprechen die Blattfedern 19 in etwa der Breite der in fig. 4 dargestellten Scheibensegmente 13.

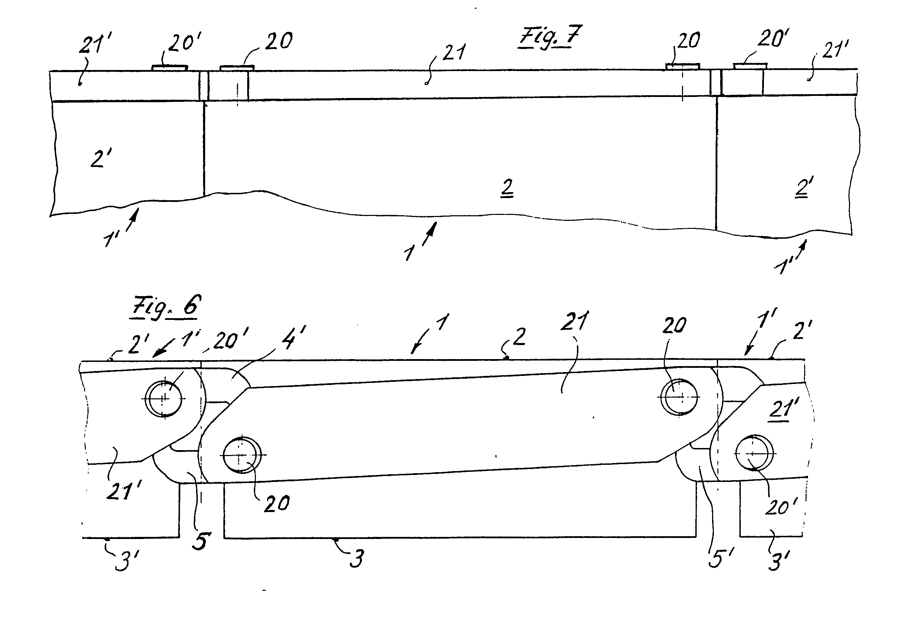

In Fig. 6 und 7 ist ein Kettenglied dargestellt, das im wesentlichen der Ausführungsform gemäß Fig. 1 entspricht, das jedoch an seinen Querstegen 4 und 5 bzw. 4' und 5' über den Randbereich der Gleiskette hinausragende bolzenartige Verlängerungen 20 bzw. 20' aufweist an denen jeweils ein das Kettenglied 1 bzw. 1' zu beiden Seiten abdeckender Schutzbügel 21 bzw. 21' befestigt ist. Damit ist das Kettenglied vor Beschädigungen durch seitlich auf die Randbereiche der Gleiskette einwirkende scharfkantige Gesteinsbrocken und dergleichen gesichert.

**Patentansprüche**

1. Kettenglied einer Gleiskette, das an seinen beiden Verbindungsstellen zu den anschließenden Kettengliedern (1, 1') starre Querstege (4, 5 bzw. 4', 5' aus Stahl aufweist, die mit den Querstegen der nachfolgenden Kettenglieder verbindbar sind, wobei das Kettenglied (1, 1' zwischen seinen beiden Querstegen aus elastomerem Material (9) besteht, in dem biegeweiche Elemente (8) aus Stahl hoher Festigkeit in Form eines Schubfeldträgers eingelagert sind, der aus einer oder mehreren Lagen dünner Stahlfolien gebildet ist und der mit den beiden Querstegen de Kettengliedes jeweils mittels einer Klemmleiste (6, 7 bzw. 6', 7' verbunden ist, dadurch gekennzeichnet, daß zwischen der dem Quersteg (4, 5, bzw. 4', 5') abgewandten Seite der Klemmleiste (6, 7, bzw. 6', 7') und dem Schubfeldträger (8 bzw. 8') elastomeres Material (9 bzw. 9') eingeschlossen ist.

2. Kettenglied nach Anspruch 1, dadurch gekennzeichnet, daß das elastomere Material (9 bzw. 9') in einem von der Außenseite der Klemmleiste (6, 7, bzw. 6', 7') und dem Schubfeldträger (8 bzw. 8') gebildeten Spaltraum (10 bzw. 10') eingeschlossen ist, der sich zu der, dem benachbarten Kettenglied (1') zugewandten Umlenkkante (11) der Klemmleiste (6, 7, bzw. 6', 7') verjüngt.

3. Kettenglied nach Anspruch 1 oder 2, dadurch gekennzeichnet, daß jeder Schubfeldträger (8 bzw. 8') auf der der zugehörigen Klemmleiste (6, 7, bzw. 6', 7') abgewandten Seite mit einer Lage (12 bzw. 12') elastomeren Materials (9 bzw. 9') belegt ist.

4. Kettenglied nach einem der Ansprüche 1 bis 3, dadurch gekennzeichnet, daß die Schubfeldträger (8 bzw. 8') benachbarter Kettenglieder (1 bzw. 1') in etwa in gleicher Ebene angeordnet sind, wobei benachbarte Schubfeldträger an den Verbindungsstellen mit entgegengesetzt gerichteter Steigung in den zwischen Quersteg (4, 5, bzw. 4', 5') und Klemmleiste (6, 7, bzw. 6', 7') gebildeten Klemmspalt geführt sind.

5. Kettenglied nach einem der Ansprüche 1 bis 4, dadurch gekennzeichnet, daß an den Verbindungsstellen der Kettenglieder (1 bzw 1') an den beiden äußeren Randbereichen der Innenlauffläche (2 bzw. 2') für die Fahrwerksräder jeweils ein, ein Einknicken der Gleiskette verhinderndes Stützelement befestigt ist.

6. Kettenglied nach Anspruch 5, dadurch gekennzeichnet, daß das Stützelement aus einem Scheibensegment (13) besteht, das mittig an den Querstegen (4 bzw. 4') befestigt ist und dessen gekrümmte Abwälzfläche (14) der Innenlauffläche (2 bzw. 2') zugewandt ist und einen Krümmungsradius aufweist, der kleiner oder gleich dem Radius der Fahrwerksräder ist.

7. Kettenglied nach Anspruch 6, dadurch gekennzeichnet, daß der von der Innenlauffläche (2 bzw. 2') und der gekrümmten Abwälzfläche (14) des Scheibensegments (13) umschlossene Spaltraum (15) von einer Gummihaube (16) abgedeckt ist.

8. Kettenglied nach Anspruch 5, dadurch gekennzeichnet, daß das Stützelement aus einer oder mehreren, an den Querstegen (4 bzw. 4') befestigten und auf der Innenlauffläche (2 bzw 2') aufliegenden Blattfeder (19) besteht.

9. Kettenglied nach Anspruch 8, dadurch gekennzeichnet, daß das Stützelement aus einem Blattfederpaket (18) besteht, dessen Blattfedern (19) in von der Innenlauffläche (2 bzw. 2') abgewandter Richtung in Abstufungen verkürzt sind.

10. Kettenglied nach einem der Ansprüche 1 bis 9, dadurch gekennzeichnet, daß die Querstege (4, 5, bzw. 4', 5') eines Kettengliedes (1 bzw. 1') über den seitlichen Rand des Kettengliedes (1 bzw. 1') hinausragende bolzenartige Verlängerungen (20 bzw. 20') aufweisen, an denen zumindest an einem seitlichen Rand des Kettengliedes (1 bzw. 1') ein Schutzbügel (21 bzw. 21') befestigt ist.

**Revendications**

1. Maillon d'une chenille qui présente, en ses deux endroits de jointure avec les maillons (1, 1') auxquels il est relié, des traverses (4, 5 ou 4', 5') rigides en acier, qui peuvent être reliées aux traverses des maillons suivants, tandis que le maillon (1, 1') est constitué entre ses deux traverses par une matière élastomère (9) dans laquelle sont logés des éléments (8) souples à la flexion, en acier à haute résistance, sous forme d'un support de champ de poussée qui est constitué par une ou plusieurs couches de minces feuilles d'acier et qui est respectivement relié, au moyen d'une barrette (6, 7 ou 6', 7') de serrage, aux deux traverses du maillon, maillon caractérisé en ce que de la matière élastomère (9 ou 9') est enfermée entre la face de la barrette (6, 7 ou 6', 7') de serrage éloignée de la traverse (4, 5 ou 4', 5') et le support (8 ou 8') de champ de poussée.

2. Maillon selon la revendication 1, caractérisé en ce que la matière élastomère (9 ou 9') est en fermée dans un interstice (10 ou 10'), constitué par la face extérieure de la barrette (6, 7 ou 6', 7') de serrage et le support (8 ou 8') de champ de poussée, qui se rétrécit vers le bord (11) de renvoi de la barrette (6, 7 ou 6', 7') de serrage orienté vers le maillon (1') voisin.

3. Maillon selon la revendication 1 ou 2, caractérisé en ce que chaque support (8 ou 8') de champ de poussée est garni, sur la face éloignée de la barrette (6, 7 ou 6', 7') de serrage correspondante, d'une couche (12 ou 12') de matière élastomère (9 ou 9').

4. Maillon selon 1'une des revendications 1 à 3, caractérisé en ce que les supports (8 ou 8') de champ de poussée de maillons voisins (1 ou 1') sont disposés sensiblement dans un même plan, et en ce que des supports voisins sont guidés aux points de jonction, avec une pente ascendante de sens opposé, par une fente de serrage constituée entre la traverse (4, 5 ou 4', 5') et la barrette (6, 7 ou 6', 7') de serrage,.

5. Maillon selon l'une des revendications 1 à 4, caractérisé en ce qu'un élément d'appui, interdisant un pliage de la chenille aux points de jonction des maillons (1 ou 1'), est respectivement fixé sur les deux régions de bord extérieures de la surface (2 ou 2') de roulement intérieure des roues du mécanisme de déplacement.

6. Maillon selon la revendication 5, caractérisé en ce que l'élément d'appui est constitué par un segment (13) de disque, qui est fixé en son milieu sur les traverses (4 ou 4'), et dont la surface de développement (14) incurvée est tournée vers la surface intérieure (2 ou 2') de roulement et présente un rayon de courbure qui est inférieur ou égal au rayon des roues du mécanisme de déplacement.

7. Maillon selon la revendication 6, caractérisé en ce que l'interstice (15) délimité par la surface intérieure (2 ou 2') de roulement et la surface de développement (14) incurvée du segment (13) de disque est recouvert d'un chapeau (16) en caoutchouc.

8. Maillon selon la revendication 5, caractérisé en ce que l'élément d'appui est constitué par un ou plusieurs ressorts à lame (19) fixés sur les traverses (4 ou 4') et s'appuyant sur la surface intérieure (2 ou 2') de roulement.

9. Maillon selon la revendication 8, caractérisé en ce que l'élément d'appui est constitué par un groupe (18) de ressorts à lame dont les ressorts (19) sont raccourcis par degrés dans la direction opposée à la surface intérieure (2 ou 2') de roulement.

10. Maillon selon l'une des revendications 1 à 9, caractérisé en ce que les traverses (4, 5 ou 4', 5') d'un maillon (1 ou 1') présentent des prolongements (20 ou 20') semblables à des boulons, faisant saillie sur le bord latéral du maillon (1 ou 1') et sur lesquels est fixée une pièce recourbée (21 ou 21') de protection sur au moins un bord latéral du maillon (1 ou 1').

.Claims

1. Track link of a caterpillar track, which at its two connecting points to the adjoining track links (1, 1') comprises rigid cross-bars (4, 5 or 4', 5') of steel, which can be connected to the cross-bars of the subsequent track links, between its two cross-bars, the track link (1, 1') consisting of elastomeric material (9), in which flexible members (8) of high strength steel in the form of a sliding section support are encased, which is formed from one or more layers of thin steel sheets and which is connected to the two cross-bars of the track link in each case by means of a clamping bar (6, 7 or 6', 7'), characterised in that elastomeric material (9 or 9') is enclosed between the side of the clamping bar (6, 7 or 6', 7') remote from the cross-bar (4, 5 or 4', 5') and the sliding section support (8 or 8').

2. Track link according to Claim 1, characterised in that the elastomeric material (9 or 9') is enclosed in a gap (10 or 10') formed by the outside of the clamping bar (6, 7 or 6', 7') and the sliding section support (8 or 8'), which gap tapers towards the deflection edge (11) of the clamping bar (6, 7 or 6', 7'), which edge faces the adjacent track link (1').

3. Track link according to Claim 1 or 2, characterised in that on the side remote from the associated clamping bar (6, 7 or 6', 7'), each sliding section support (8 or 8') is covered with a layer (12 or 12') of elastomeric material (9 or 9').

4. Track link according to one of Claims 1 to 3, characterised in that the sliding section supports (8 or 8') of adjacent track links (1 or 1') are arranged approximately in the same plane, adjacent sliding section supports being guided at the connecting points with oppositely directed pitch, in the clamping gap formed between the cross-bar (4, 5 or 4', 5') and clamping bar (6, 7 or 6', 7').

5. Track link according to one of Claims 1 to 4, characterised in that a support member preventing bending-in of the caterpillar track is respectively attached at the connecting points of the track links (1 or 1') at the two outer edge regions of the inner rolling surface (2 or 2') for the chassis wheels.

6. Track link according to Claim 5, characterised in that the support member consists of a disc segment (13), which is attached centrally to the cross-bars (4 or 4') and whereof the curved rolling surface (14) faces the inner rolling surface (2 or 2') and has a radius of curvature which is less than or equal to the radius of the chassis wheels.

7. Track link according to Claim 6, characterised in that the gap (15) enclosed by the inner rolling surface (2 or 2′) and the curved rolling surface (14) of the disc segment (13) is covered by a rubber cap (16).

8. Track link according to Claim 5, characterised in that the support member consists of one or more leaf springs (19) attached to the cross-bars (4 or 4′) and supported on the inner running surface (2 or 2′).

9. Track link according to Claim 8, characterised in that the support member consists of a set of leaf springs (18), whereof the leaf springs (19) are reduced in length in steps in the direction remote from the inner running surface (2 or 2′).

10. Track link according to one of Claims 1 to 9, characterised in that the cross-bars (4, 5 or 4′, 5′) of a track link (1 or 1′) have bolt-like extensions (20 or 20′) projecting beyond the lateral edge of the track link (1 or 1′), attached to which extensions at least on one side edge of the track link (1 or 1′) is a protective bracket (21 or 21′).

Fig. 1

Fig.2

EP 0 232 833 B1

_Fig. 3_

4'  13  16  16  13  4

1'  1

15  14  14  15

8'  8'

9'  9'

3'  5  3  9  5'  3

Fig. 4

_Fig.5_

EP 0 232 833 B1

_Fig. 7_

_Fig. 6_